# EUROPEAN PATENT SPECIFICATION

(11) **EP 2 802 391 B1**
(45) Date of publication and mention of the grant of the patent: **15.06.2016**
(21) Application number: 13701381.9
(22) Date of filing: 10.01.2013
(51) Int. Cl.: A63C 11/22

(54) **A HAND STRAP FOR A SKIING POLE OR SIMILAR**
HANDRIEMEN FÜR EINEN SKISTOCK ODER DERGLEICHEN
DRAGONNE POUR UN BÂTON DE SKI OU SIMILAIRE

(30) Priority: 13.01.2012 NO 20120041; 22.08.2012 NO 20120940
(43) Date of publication of application: 19.11.2014
(73) Proprietor: Swix Sport AS, 0411 Oslo (NO)
(72) Inventor: PEDERSEN, Svein, N-1812 Askim (NO); KARLÖF, Lars, N-1481 Haugan (NO); MEYER, Erik, Lorange, 0776 Oslo (NO); REITEN, Elise, N-1353 Bærums Verk (NO)
(74) Representative: Onsagers AS
(86) International application number: PCT/EP2013/050390
(87) International publication number: WO 2013/104709

(56) References cited:
- EP-A1- 0 357 517
- WO-A1-2007/134475
- WO-A1-2010/057240
- US-A- 5 887 282
- US-A1- 2012 007 339

## Description

### Field of the invention

The invention relates to hand strap for securing a hand to a pole, stick or staff; in particular to a pole used for skiing or walking. In particular, the invention concerns a hand strap, comprising a flexible hand-supporting strap body having first and second ends configured for connection to a handle of a skiing pole or similar, as set out in the preamble of claim 1.

### Background of the invention

Hand straps for securing a user's hand to a skiing pole or a walking pole exist in a number of varieties.

The state of the art includes US 4,162,081 which shows a modification of a conventional loop strap. The loop comprises an adjustable release mechanism, by means of which the loop may be opened in order to free the user's hand.

The state of the art also includes US 5,092,629 which discloses a strap having a cuff that is intended to encircle the wrist of the user's hand. The cuff may be open and thus comprise two ends that are designed to extend out from a hand covering through slots. The two ends are furnished with gripping means (e.g. a hook-and-loop fastener) permitting the cuff to be adapted to various sized wrists.

The state of the art also includes WO 96/34665 which discloses a hand-wrapping harness having a strap section extending around the thumb, a strap section extending around the lower edge of the palm, and a strap section extending around the wrist. The strap section extending around the wrist is provided with a releasable and sealable joint or splice.

The state of the art also includes EP 0908 207 which discloses a harness-like fastening means for securing the hand to a ski-pole grip. The fastening means includes a thumb hole and a protector element extending from the area between the thumb and forefinger to the wrist area, surrounding at least partially the thumb-side outer edge of the hand, and at least one wrist-encircling tightening strap. The protector element is provided with at least one adjustment strap that extends in a substantially wrist-encircling direction and is fitted with a fastening buckle that is intended for cooperation with the tightening strap and whose position along the adjustment strap is adjustable longitudinally of the adjustment strap according to the size of a user's hand.

The present applicant has devised and embodied this invention in order to overcome these shortcomings and to obtain further advantages.

Document WO 2007/134475 discloses a hand strap according to the preamble of claim 1.

### Summary of the invention

The invention is set forth and characterized in the main claim, while the dependent claims describe other characteristics of the invention.

It is thus provided a hand strap, comprising a flexible hand-supporting strap body having first and second ends configured for connection to a handle of a skiing pole or similar, characterized by a flexible support member extending from a branching region on the body and having a free end, and comprising an adjustable locking device configured for releasably securing the free end to a securing portion of the body. The area of the flexible support member may extend and broaden towards the free end 4b in order to provide a larger support area, thus providing better support of the wrist and thumb.

In the invention, the hand strap comprises an elastic retaining element arranged in a region of the flexible support member at the outer side of the strap turning away from the user's hand.

In one embodiment, the body comprises a central first support region located between the first and second ends and being configured for supporting a lower part of the hand. The branching region and the securing portion are in one embodiment arranged on opposite sides of the first support region.
In one embodiment, the branching region and the securing portion are arranged at equal or approximately the same distances from the first support region.
The support member comprises in one embodiment a central second support region located approximately at equal distances between the branching region and the free end; said second support region being configured for supporting an upper part of the hand.
In one embodiment, the central first support region is arranged approximately at equal distances between the first and second ends.
In one embodiment, the securing portion comprises a first locking element for releasable connection to the adjustable locking device.
In one embodiment, the adjustable locking device comprises a serrated slit in the support member, configured for cooperation with a peg connected to a second locking element.
In another embodiment, the adjustable locking device comprises a plurality of holes in the support member, configured for cooperation with a peg connected to a second locking element.
In another embodiment, the adjustable locking device comprises a serrated strap secured to the free end and movably connected to a ratchet clasp; and the ratchet clasp being connected to a second locking element.

In yet another embodiment, the adjustable locking device comprises a hook-and-loop fastener, where a plurality of hooks are arranged in a region of a free end of the support member, and a plurality of loops are arranged in the securing portion, or vice versa. The hooks and the loops are advantageously arranged on opposite sides of the hand strap.

In one embodiment, the structural member comprises an elastic material providing structural support for the strap. The structural member is advantageously a sheet member embedded between the inner and outer cladding materials. The structural member comprises advantageously an elastic plastic material or an elastic metal material.
In one embodiment the hand strap comprises an elastic retaining element arranged in a region of the flexible support member at the outer side of the strap turning away from the user's hand. The elastic retaining element may have a shape and size adapted to the hand strap and is made of an elastic material providing an outward directed force which pulls the support member away from the user's hand. In the case where the adjustable locking device comprises a hook-and-loop fastener, the elastic retaining element (19) is arranged at the opposite side of the loops or hooks of the support member.

The first and second ends are in one embodiment connectable to the handle via a flexible attachment member.

### Brief description of the drawings

These and other characteristics of the invention will be clear from the following description of a preferential form of embodiment, given as a non-restrictive example, with reference to the attached drawings wherein:
Figure 1 is a perspective drawing of an embodiment of the invented hand strap configured for use by a left hand, connected to a pole and strapped to a left hand;
Figure 2 is a view similar to that of figure 1, but the lock is shown in an open position and the support member is released from the loop;
Figure 3 is a view similar to that of figure 2, and shows the support member in a more open position that in figure 2;
Figure 4 is a perspective view of the embodiment shown in figures 1 - 3, in an open position and without pole and hand;
Figure 5 is a plan view of the embodiment shown in figures 1 - 4 but configured for use by a right hand, and shows an alternative embodiment of the adjustment device;
Figure 6 is a plan view of the embodiment shown in figure 5, and illustrates the orientation of the support member free end in relation to the strap body when connected;
Figure 7 is a perspective view of an alternative embodiment of the invented hand strap, configured for use by a right hand, in a closed open position and without pole and hand, showing yet an alternative embodiment of the adjustment device;
Figure 8a is a plan view similar to that of figure 5, illustrating yet another embodiment of the locking and adjustment device;
Figure 8b is a plan view illustrating the reverse side of the portion shown in the area marked "A" in figure 8a; and
Figure 9 is a sketch illustrating a layered composition of the invented hand strap.
Figure 10 is a plan view illustrating yet another embodiment of the invented hand strap.

### Detailed description of a preferential embodiment

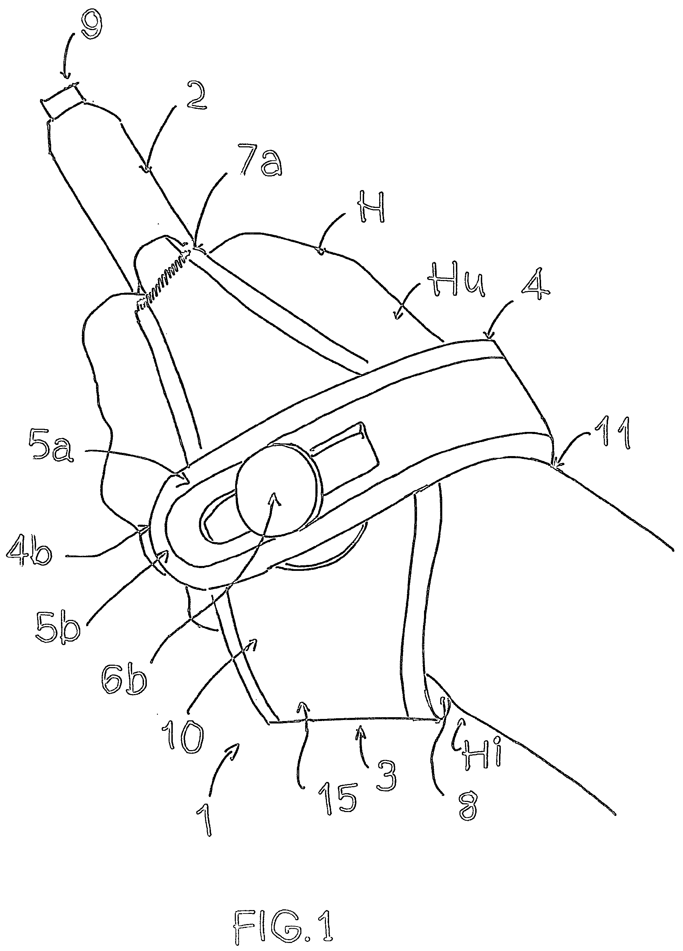

Figure 1 shows an embodiment of the invented hand strap 1 strapped to a left hand H and connected to the handle 2 of a pole (e.g. a skiing pole; not shown) via a connection strap 9 in a manner which is well known. The inward side, facing the user's hand, is designated by reference number 14, while the outward side is denoted by the reference number 15 (see e.g. figures 1 - 4).

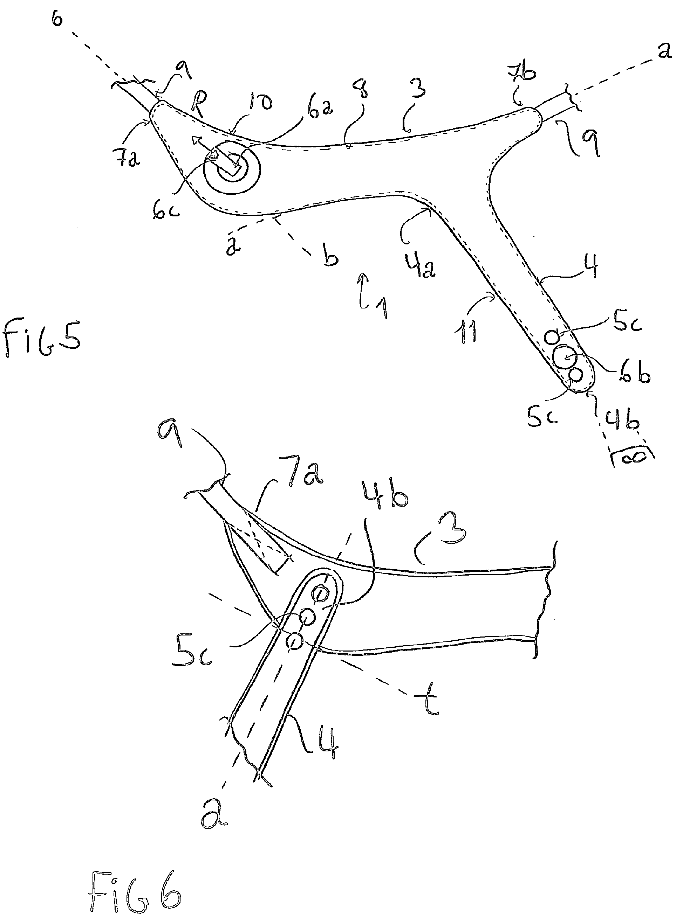

Referring additionally to figure 5 (showing an unfolded right-hand strap), the strap 1 comprises a flexible loop - or main strap body - 3 having a first end 7a and a second end 7b. The ends 7a,b are fastened to the connection strap 9 in a known fashion. A flexible support member 4 extends from a branching region 4a on the body 3 and has a free end 4b. An adjustable lock 5a, b, 6b is arranged in the region of the support member's free end 4b.

In use (see e.g. figure 1), the strap body 3 supports a lower hand portion Hₗ (i.e. a lower portion between the palm of the hand and the back of the hand) via a lower support region 8. The branching region 4a is arranged between this lower support region 8 and the second end 7b, and in the illustrated embodiment approximately halfway between.

On the other side of the lower support region 8 is a securing portion 10, which in the illustrated embodiment is arranged approximately halfway between the lower support region 8 and the first end 7a.

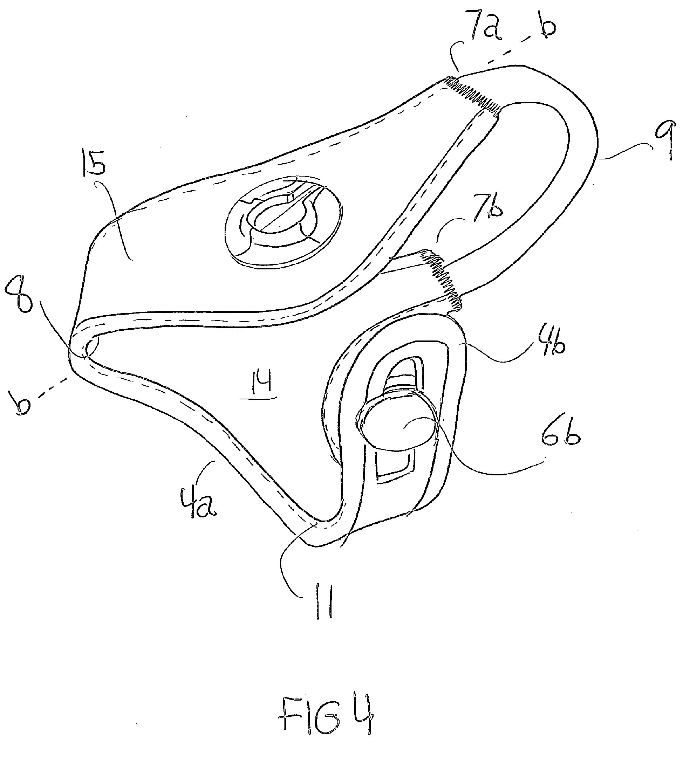

In the embodiment illustrated in figures 1 - 4, the adjustable lock comprises a peg 5b is arranged in a serrated slit 5a in the support member 4. The peg 5b is in turn connected to (or integral with) a locking element 6b that is designed for cooperation with a corresponding locking element 6a in the securing portion 10. The locking elements 6a,b are of a known type and the first locking element 6a comprises a recessed slot 6c configured for receiving the second locking element 6b. The locking elements are preferably magnetic, such that the second locking element is held in place in the slot 6c. The slot 6c is arranged parallel with an axis b-b extending to the first end (see figure 4 or figure 5), such that the second locking element 6b must be entered and removed from the slot 6c in the direction indicated by the double arrow "R" in figure 5, i.e. towards the first end.

Figure 5 and figure 6 illustrate an embodiment of the adjustment device where the serrated slot has been replaced by a number of holes 5c that are configured for accommodating the peg 5b.

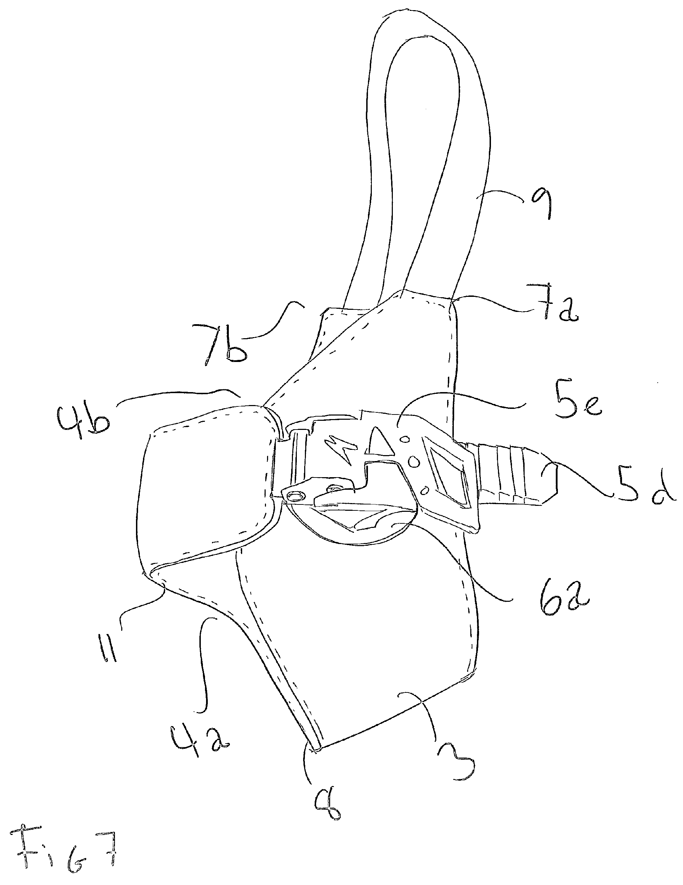

Figure 7 illustrates yet another embodiment of the adjustment device. A serrated strap 5d is connected to the free end 4b and cooperates with a ratchet clasp 5e in a manner that per se is known in the art. The second locking element 6b is connected to the ratchet clasp.

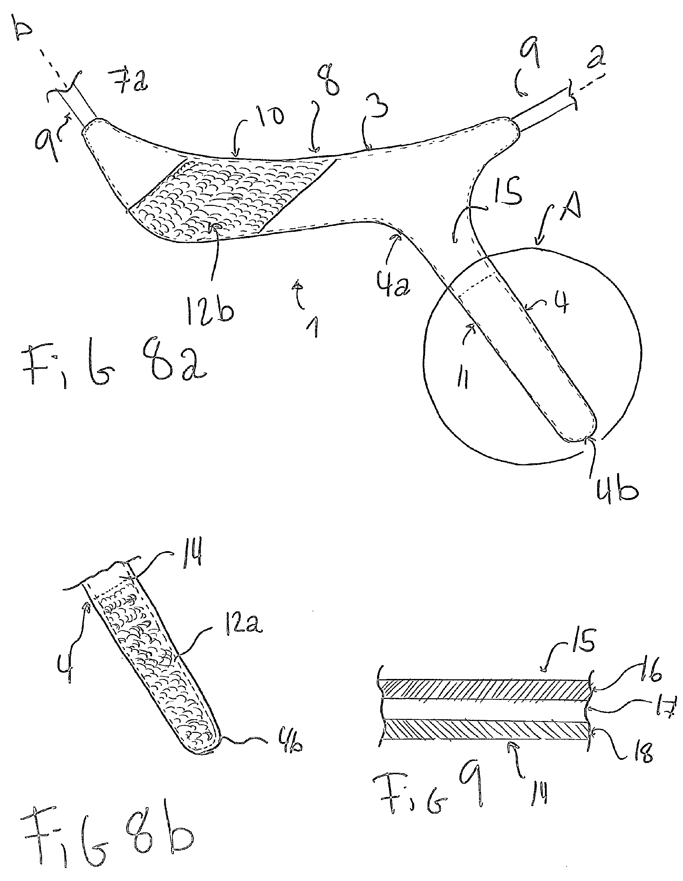

In one embodiment, the locking and adjustment device comprises a hook-and-loop fastener, such as a *Velcro*™ type fastener. This is illustrated by figures 8a and 8b, where a plurality of hooks 12a are arranged in a region of the free end 4a of the support member 4 and a plurality of loops 12b are arranged in the securing portion 10. In the illustrated embodiment, the loops 12b are arranged on the outward side 15 of the strap facing away from the hand when the strap is in use, while the hooks 12a are arranged on the opposite, inward side 14 (figure 8b). It should be understood that the hooks may be arranged on the securing portion and the loops may be arranged on the support member.

Referring to figure 9, the hand strap 1 is in the illustrated embodiment composed of an inner cladding 18 (comprising the inward side 14 bearing against the user's hand), an outer cladding 16 (comprising the outward side 15), and an intermediate structural member 17. The inner cladding 18 is preferably of a soft material which feels comfortable to the user. The outer cladding is preferably of a wear-resistant material and provides support for various labels and (for the applicable embodiment) for the loops in the securing portion.

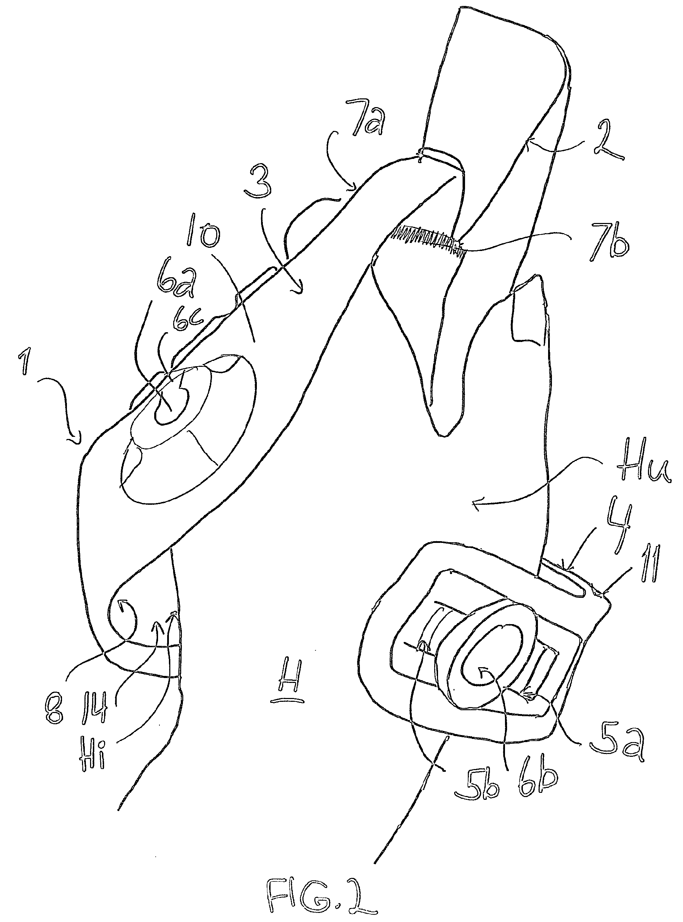

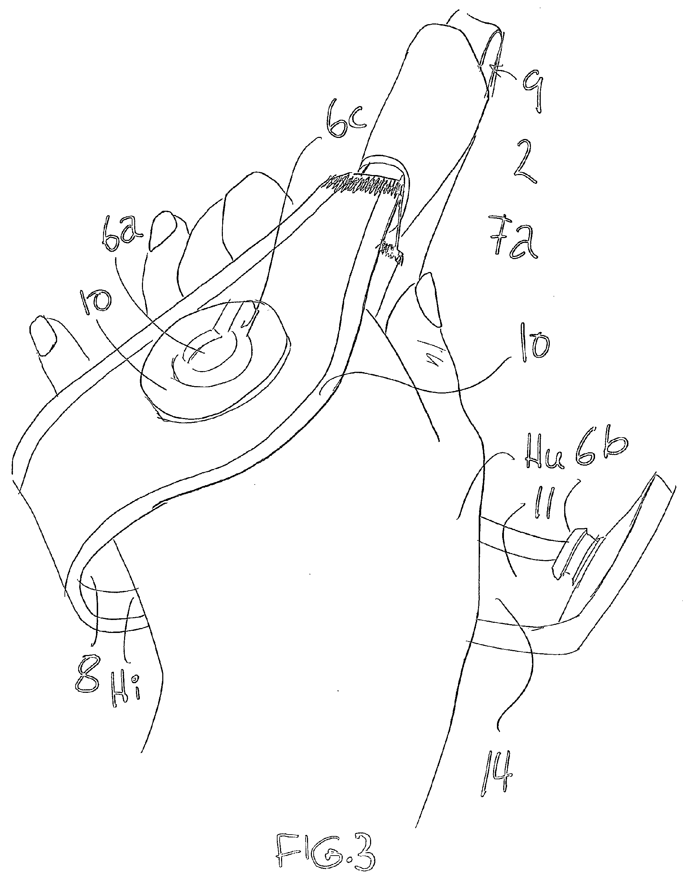

The intermediate structural member 17 is also in this embodiment a sheet material, essentially covering the area between the outer and inner cladding, and comprises an elastic material of a stiffness that provides structural integrity for the strap. The intermediate structural member 17 comprises advantageously an elastic plastic material (e.g. polypropylene), but may be of any material providing the necessary elasticity and stiffness (e.g. a metal). The structural member 17 is thus flexible, but has a certain amount of stiffness, and returns to its original shape when the deformation force has been removed. The dotted line in figure 8a indicates a possible and advantageous outline for the intermediate structural member.
When using the invented hand strap, the user inserts all fingers but the thumb through the looped strap body 3 when the free end 4b is disconnected from the securing portion 10 and the free end thus extends away from the body (see figure 3) due to the stiffness of the structural member 17. The strap is therefore in effect "self-opening", also due to the stiffness and elasticity of the structural member 17 in the support 4. The thumb is then placed on the opposite side of the pole handle 2 from the other fingers, outside the looped strap body 3 (see figure 2 or figure 3). The strap body second end 7b is closer to the pole handle 2 than the first end 7a is, such that the branching region 4a is between the palm of the hand and the handle 2. With the hand in this position, the support member 4 may be folded across an upper hand portion Hᵤ (i.e. an upper portion between the palm of the hand and the back of the hand) and the free end 4b secured to the securing portion 10, as shown in the figures and explained above. The adjustment device may now be adjusted to suit the user, either by means of the serrated slit/peg 5a/5b (figures 1 - 4), the holes 5c (figures 5, 6), the ratchet clasp 5e (figure 7, or the hook-and-loop fastener 12a,b (figures 8a, 8b) . When the user wants to release the hand from the strap having the magnetic lock 6a,b, the second locking element 6b is moved out of the slot 6c and the support member 4 flexes outwards and opens up due to the embedded elastic structural member 17. The hand may thus easily be withdrawn out of the loop strap. With the adjustment device already adjusted to the user's hand, the user may readily reconnect the hand to the pole by simply inserting the hand and securing the free end to the securing portion 10, without time consuming readjustment. When the user wants to release the hand from the strap having the hook-and-loop fastener, the free end 4b is simply pulled back to disengage the hooks 12a from the loops 12b, whereupon the hand may be easily withdrawn out of the loop strap. The user may readily reconnect the hand to the pole by simply inserting the hand and securing the free end 4b to the securing portion 10; the structural member 17 ensuring that the support member 4 and its free end 4b extends away from the body, thus defining an entry opening for the hand.

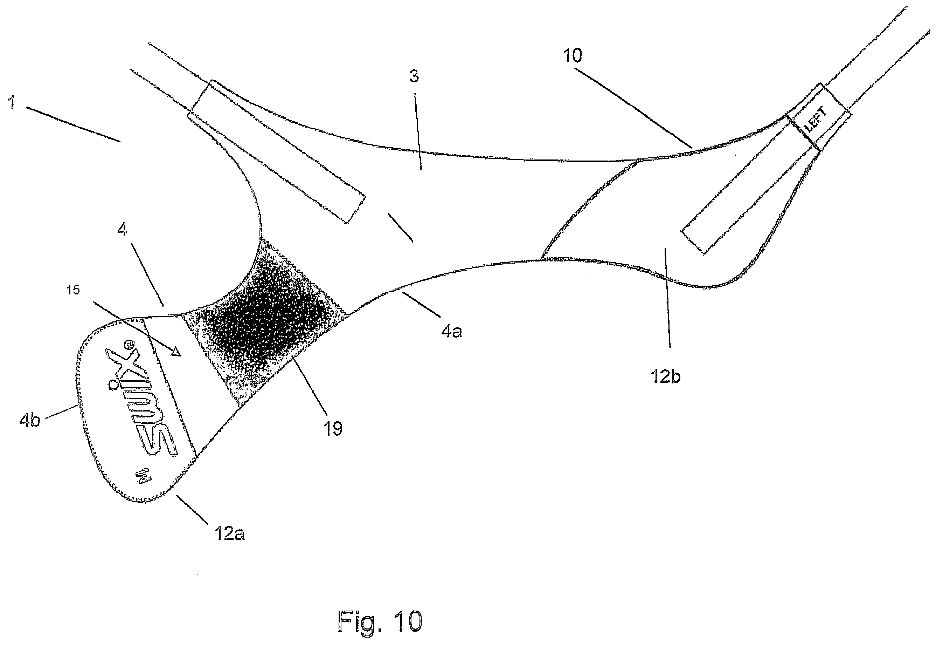

Figure 10, shows an unfolded left-hand strap which has similarities to the embodiment of figure 8a and 8b. The hand strap 1 comprises a flexible hand-supporting strap body 3 having first and second ends 7a, 7b configured for connection to a handle 2 of a skiing pole or similar. A flexible support member 4 extends from a branching region 4a on the body 3 and has a free end 4b. The area of the flexible support member extends towards the free end 4b in order to provide a larger support area, thus providing better support of the wrist and thumb. The adjustable locking device 12a, 12b comprises a hook-and-loop fastener, such as a *Velcro*™ type fastener as in figures 8a and 8b, where a plurality of hooks 12a are arranged in a region of the free end 4a of the support member 4 and a plurality of loops 12b are arranged in the securing portion for releasable securing the free end 4b to the securing portion 10 of the body 3. An elastic retaining element 19 is arranged in a region of the flexible support member at or near the end of the support member extending from the branching region 4a. In the illustrated embodiment, the loops 12b are arranged on the outward side 15 of the strap facing away from the hand when the strap is in use, while the hooks 12a are arranged on the opposite, inward side. The elastic retaining element 19 is arranged at the outward side 15 of the strap. The elastic retaining element 19 should have an elasticity, shape and size adapted to apply an adequate force for pulling and keeping the support member away from the user's hand when the free end 4b is disconnected from the securing portion 10.

The elastic retaining element 19 may be made of rubber band or elastic band, and applies an outward directed force on the strap in the region where the elastic retaining element is arranged. This outward directed force causes the strap to pull the support member 4 away from the body when the free end is released from the securing portion of the body, and keeping it away from the body. The strap is therefore kept open when the hand has been withdrawn, thus providing easy access when re-entering the strap with the hand.

The invented strap has particular benefit in sports such as biathlon, where a rapid and care-free disconnection from, and re-connection to, the pole is essential.

## Claims

1. A hand strap (1), comprising a flexible hand-supporting strap body (3) having first and second ends (7a, 7b) configured for connection to a handle (2) of a skiing pole or similar, a flexible support member (4) extending from a branching region (4a) on the body (3) and having a free end (4b), and comprising an adjustable locking device (5a-e, 6b; 12a,b) configured for releasably securing the free end (4b) to a securing portion (10) of the body (3),
**characterized in that** it comprises an elastic retaining element (19) arranged in a region of the flexible support member at the outer side of the strap turning away from the user's hand.

2. The hand strap of claim 1, wherein the adjustable locking device comprises a hook-and-loop fastener, where a plurality of hooks (12a) are arranged in a region of a free end (4b) of the support member (4), and a plurality of loops (12b) are arranged in the securing portion (10), or vice versa, and wherein the elastic retaining element (19) is arranged at the opposite side of the loops or hooks of the support member.

3. The hand strap of claim 1, wherein the elastic retaining element (19) is made of rubber band or elastic band.

4. The hand strap of claim 1, wherein the body (3) comprises a central first support region (8) located between the first and second ends and being configured for supporting a lower part (Hₗ) of the hand.

5. The hand strap of claim 4, wherein the branching region (4a) and the securing portion (10) are arranged on opposite sides of the first support region (8).

6. The hand strap of claim 4, wherein the branching region (4a) and the securing portion (10) are arranged at equal or approximately the same distances from the first support region (8).

7. The hand strap of any one of the preceding claims, wherein the central first support region (8) is arranged approximately at equal distances between the first and second ends.

8. The hand strap of any one of the preceding claims, wherein the support member (4) comprises a central second support region (11) located approximately at equal distances between the branching region (4a) and the free end (4b); said second support region being configured for supporting an upper part (Hᵤ) of the hand.

9. The hand strap of any one of the preceding claims, wherein the securing portion (10) comprises a first locking element (6a; 12b) for releasable connection to the adjustable locking device.

10. The hand strap of any one of the preceding claims, wherein the adjustable locking device comprises a serrated slit (5a) in the support member, configured for cooperation with a peg (5b) connected to a second locking element (6b).

11. The hand strap of any one of claims 1 - 9, wherein the adjustable locking device comprises a plurality of holes (5c) in the support member, configured for cooperation with a peg (5b) connected to a second locking element (6b).

12. The hand strap of any one of claims 1 - 9, wherein the adjustable locking device comprises a serrated strap (5d) secured to the free end (4b) and movably connected to a ratchet clasp (5e); and the ratchet clasp being connected to a second locking element (6b).

13. The hand strap of claim 2, wherein the hooks and the loops are arranged on opposite sides of the hand strap (1).

14. The hand strap of any one of the preceding claims, comprising an inner cladding material (18) configured for being in contact with the hand, an outer cladding material (16), and an intermediate structural member (17).

15. The hand strap of claim 14, wherein the structural member (17) comprises an elastic material providing structural support for the strap.

16. The hand strap of claim 15, wherein the structural member is a sheet member embedded between the inner (18) and outer (16) cladding materials.

17. The hand strap of any of claims -14-16, wherein the structural member (17) comprises an elastic plastic material or an elastic metal material.

18. The hand strap of any one of the preceding claims, wherein the first and second ends (7a, 7b) are connectable to the handle (2) via a flexible attachment member (9).

## Patentansprüche

1. Handschlaufe (1) mit einem flexiblen Handstützbandkörper (3) mit einem ersten und einem zweiten Ende (7a, 7b), die für eine Verbindung mit einem Handgriff (2) eines Skistocks oder dergleichen konfiguriert sind, einem flexiblen Stützelement (4), das sich von einem Verzweigungsabschnitt (4a) auf dem Körper (3) erstreckt und ein freies Ende (4b) aufweist, und mit einer verstellbaren Verriegelungseinrichtung (5a-e, 6b; 12a,b), die dafür konfiguriert ist, das freie Ende (4b) an einem Befestigungsabschnitt (10) des Körpers (3) lösbar zu befestigen,
**dadurch gekennzeichnet, dass** die Handschlaufe ein elastisches Halteelement (19) aufweist, das in einem Bereich des flexiblen Stützelements an der Außenseite der Schlaufe, abgewandt von der Hand des Benutzers angeordnet ist.

2. Handschlaufe nach Anspruch 1, wobei die verstellbare Verriegelungseinrichtung einen Klettverschluss aufweist, bei dem mehrere Haken (12a) in einem Bereich eines freien Endes (4b) des Stützelements (4) angeordnet sind und mehrere Schlingen (12b) im Befestigungsabschnitt (10) angeordnet sind oder umgekehrt, und wobei das elastische Halteelement (19) an der gegenüberliegenden Seite der Schlingen oder Haken des Stützelements angeordnet ist.

3. Handschlaufe nach Anspruch 1, wobei das elastische Halteelement (19) aus einem Gummiband oder aus einem elastischen Band hergestellt ist.

4. Handschlaufe nach Anspruch 1, wobei der Körper (3) einen zwischen dem ersten und dem zweiten Ende angeordneten mittigen ersten Stützbereich (8) aufweist, der dafür konfiguriert ist, einen unteren Teil (Hₗ) der Hand zu stützen.

5. Handschlaufe nach Anspruch 4, wobei der Verzweigungsabschnitt (4a) und der Befestigungsabschnitt (10) an gegenüberliegenden Seiten des ersten Stützbereichs (8) angeordnet sind.

6. Handschlaufe nach Anspruch 4, wobei der Verzweigungsabschnitt (4a) und der Befestigungsabschnitt (1) in gleichen oder annähernd gleichen Abständen von dem ersten Stützbereich (8) angeordnet sind.

7. Handschlaufe nach einem der vorangehenden Ansprüche, wobei der mittige erste Stützbereich (8) etwa in gleichen Abständen vom ersten und vom zweiten Ende angeordnet ist.

8. Handschlaufe nach einem der vorangehenden Ansprüche, wobei das Stützelement (4) einen mittigen zweiten Stützbereich (11) aufweist, der annähernd in gleichen Abständen zwischen dem Verzweigungsabschnitt (4a) und dem freien Ende (4b) angeordnet ist, wobei der zweite Stützbereich dafür konfiguriert ist, einen oberen Teil (Hᵤ) der Hand zu stützen.

9. Handschlaufe nach einem der vorangehenden Ansprüche, wobei der Befestigungsabschnitt (10) ein erstes Verriegelungselement (6a; 12b) für eine lösbare Verbindung mit der verstellbaren Verriegelungseinrichtung aufweist.

10. Handschlaufe nach einem der vorangehenden Ansprüche, wobei die verstellbare Verriegelungseinrichtung einen gezahnten Schlitz (5a) im Stützelement aufweist, der dafür konfiguriert ist, mit einem mit einem zweiten Verriegelungselement (6b) verbundenen Stift (5b) zusammenzuwirken.

11. Handschlaufe nach einem der Ansprüche 1 bis 9, wobei die verstellbare Verriegelungseinrichtung mehrere Löcher (5c) im Stützelement aufweist, die dafür konfiguriert sind, mit einem mit einem zweiten Verriegelungselement (6b) verbundenen Stift (5b) zusammenzuwirken.

12. Handschlaufe nach einem der Ansprüche 1 bis 9, wobei die verstellbare Verriegelungseinrichtung einen gezahnten Riemen (5d) aufweist, der an dem freien Ende (4b) befestigt und mit einer Ratschenschnalle (5e) beweglich verbunden ist, wobei die Ratschenschnalle mit einem zweiten Verriegelungselement (6b) verbunden ist.

13. Handschlaufe nach Anspruch 2, wobei die Haken und Schlingen an gegenüberliegenden Seiten der Handschlaufe (1) angeordnet sind.

14. Handschlaufe nach einem der vorangehenden Ansprüche, mit einem inneren Verkleidungsmaterial (18), das dafür konfiguriert ist, mit der Hand in Kontakt zu kommen, einem äußeren Verkleidungsmaterial (16) und einem dazwischenliegenden Strukturelement (17).

15. Handschlaufe nach Anspruch 14, wobei das Strukturelement (17) ein elastisches Material aufweist, das eine strukturelle Stütze für die Handschlaufe bereitstellt.

16. Handschlaufe nach Anspruch 15, wobei das Strukturelement ein zwischen dem inneren (18) und äußeren (16) Verkleidungsmaterial eingebettetes plattenförmiges Element ist.

17. Handschlaufe nach einem der Ansprüche 14 bis 16, wobei das Strukturelement (17) ein elastisches Kunststoffmaterial oder ein elastisches Metallmaterial aufweist.

18. Handschlaufe nach einem der vorangehenden Ansprüche, wobei das erste und das zweite Ende (7a, 7b) über ein flexibles Befestigungselement (9) mit dem Griff (2) verbindbar sind.

## Revendications

1. Dragonne (1) comprenant un corps de sangle de support de main flexible (3) ayant des première et seconde extrémités (7a, 7b) configurées pour se raccorder à une poignée (2) d'un bâton de ski ou similaire, un élément de support flexible (4) s'étendant à partir d'une région de bifurcation (4a) sur le corps (3) et ayant une extrémité libre (4b), et comprenant un dispositif de verrouillage ajustable (5a-e, 6b ; 12a, b) configuré pour fixer de manière amovible l'extrémité libre (4b) à une partie de fixation (10) du corps (3),
**caractérisée en ce qu'**elle comprend un élément de retenue élastique (19) agencé dans une région de l'élément de support flexible au niveau du côté externe de la sangle faisant dos à la main de l'utilisateur.

2. Dragonne selon la revendication 1, dans laquelle le dispositif de verrouillage ajustable comprend une fixation à crochets et bouclettes, où une pluralité de crochets (12a) sont agencés dans une région d'une extrémité libre (4b) de l'élément de support (4), et une pluralité de bouclettes (12b) sont agencées dans la partie de fixation (10) ou vice versa, et dans laquelle l'élément de retenue élastique (19) est agencé au niveau du côté opposé des bouclettes ou des crochets de l'élément de support.

3. Dragonne selon la revendication 1, dans laquelle l'élément de retenue élastique (19) est réalisé à partir d'une bande de caoutchouc ou d'une bande élastique.

4. Dragonne selon la revendication 1, dans laquelle le corps (3) comprend une première région de support centrale (8) positionnée entre les première et seconde extrémités et étant configurée pour supporter une partie inférieure (Hₗ) de la main.

5. Dragonne selon la revendication 4, dans laquelle la région de bifurcation (4a) et la partie de fixation (10) sont agencées sur les côtés opposés de la première région de support (8).

6. Dragonne selon la revendication 4, dans laquelle la région de bifurcation (4a) et la partie de fixation (10) sont agencées à des distances identiques ou approximativement aux mêmes distances de la première région de support (8).

7. Dragonne selon l'une quelconque des revendications précédentes, dans laquelle la première région de support centrale (8) est agencée approximativement à des distances identiques entre les première et seconde extrémités.

8. Dragonne selon l'une quelconque des revendications précédentes, dans laquelle l'élément de support (4) comprend une seconde région de support centrale (11) positionnée approximativement à des distances identiques entre la région de bifurcation (4a) et l'extrémité libre (4b) ; ladite seconde région de support étant configurée pour supporter une partie supérieure (Hᵤ) de la main.

9. Dragonne selon l'une quelconque des revendications précédentes, dans laquelle la partie de fixation (10) comprend un premier élément de verrouillage (6a ; 12b) pour le raccordement amovible au dispositif de verrouillage ajustable.

10. Dragonne selon l'une quelconque des revendications précédentes, dans laquelle le dispositif de verrouillage ajustable comprend une fente dentelée (5a) dans l'élément de support, configurée pour coopérer avec une goupille (5b) raccordée à un second élément de verrouillage (6b).

11. Dragonne selon l'une quelconque des revendications 1 à 9, dans laquelle le dispositif de verrouillage ajustable comprend une pluralité de trous (5c) dans l'élément de support, configurés pour coopérer avec une goupille (5b) raccordée au second élément de verrouillage (6b).

12. Dragonne selon l'une quelconque des revendications 1 à 9, dans laquelle le dispositif de verrouillage ajustable comprend une sangle dentelée (5d) fixée à l'extrémité libre (4b) et raccordée de manière mobile à une boucle à cliquet (5e) ; et la boucle à cliquet étant raccordée à un second élément de verrouillage (6b).

13. Dragonne selon la revendication 2, dans laquelle les crochets et les bouclettes sont agencés sur les côtés opposés de la dragonne (1).

14. Dragonne selon l'une quelconque des revendications précédentes, comprenant un matériau de revêtement interne (18) configuré pour être en contact avec la main, un matériau de revêtement externe (16) et un élément structurel intermédiaire (17).

15. Dragonne selon la revendication 14, dans laquelle l'élément structurel (17) comprend un matériau élastique fournissant le support structurel pour la sangle.

16. Dragonne selon la revendication 15, dans laquelle l'élément structurel est un élément en feuille noyé entre les matériaux de revêtement interne (18) et externe (16).

17. Dragonne selon l'une quelconque des revendications 14 à 16, dans laquelle l'élément structurel (17) comprend un matériau en plastique élastique ou un matériau métallique élastique.

18. Dragonne selon l'une quelconque des revendications précédentes, dans laquelle les première et seconde extrémités (7a, 7b) peuvent se raccorder à la poignée (2) via un élément de fixation flexible (9).
